# FASCICULE DE BREVET EUROPEEN

(11) **EP 2 673 164 B1**
(45) Date de publication et mention de la délivrance du brevet: **30.03.2016**
(21) Numéro de dépôt: 12704869.2
(22) Date de dépôt: 17.01.2012
(51) Int. Cl.: B60Q 1/00, B62D 25/12

(54) **SUPPORT DE BUTEE DE VOLET DE COFFRE ARRIERE D'UN VEHICULE**
ANSCHLAGPUFFERHALTERUNG FÜR DIE HECKTÜR EINES FAHRZEUGS
SUPPORT OF A STOPPER FOR A REAR LID OF A VEHICLE

(30) Priorité: 07.02.2011 FR 1150968
(43) Date de publication de la demande: 18.12.2013
(73) Titulaire: Peugeot Citroën Automobiles SA, 78140 Vélizy Villacoublay (FR)
(72) Inventeur: D'AMBROSIO, Leonardo, F-91510 Lardy (FR)
(86) Numéro de dépôt international: PCT/FR2012/050097
(87) Numéro de publication internationale: WO 2012/107660

(56) Documents cités:
- EP-A1- 1 669 242
- DE-A1-102008 036 188
- DE-C1- 19 809 348
- FR-A1- 2 710 592
- FR-A1- 2 921 627
- JP-A- 2007 296 883

## Description

L'invention a trait à un support de butée d'ouvrant de carrosserie de véhicule. Plus particulièrement, l'invention a trait à un support de volet arrière d'un véhicule. Elle a trait également à un dispositif de signalisation et/ou d'éclairage comprenant un tel support. L'invention a trait également à un véhicule équipé dudit support et/ou dudit dispositif de signalisation et/ou d'éclairage.

Les butées élastiques d'ouvrant de carrosserie de véhicule tel que le capot et le volet de coffre arrière sont habituellement disposées sur des éléments de carrosserie du véhicule. Elles ont essentiellement un double rôle, à savoir celui d'amortir les vibrations et celui de régler la position fermée de l'ouvrant pour assurer un affleurement précis de celui-ci avec les parties adjacentes de la carrosserie du véhicule. Pour assurer la fonction de positionnement de l'ouvrant par rapport au reste de la carrosserie, les butées sont habituellement réglables, notamment par vissage, selon leur direction longitudinale. Le fait d'implanter ces butées sur des éléments de carrosserie implique des contraintes du point de vue des cotes d'architecture du véhicule. De plus, cela implique également l'emboutissage de la carrosserie à ces lieux d'implantation de manière à assurer la rigidité requise.

Le document de brevet FR 2 710 592 A1 divulgue l'implantation de butées de capot d'un véhicule sur les boîtiers de projecteurs avant. L'objectif de cette implantation est d'éviter une opération de réglage desdites butées. En effet, l'idée sous-jacente de cette solution technique est de reporter l'opération de réglage habituel de la position longitudinale des butées à une opération de réglage de la position des projecteurs. Ce report est d'autant plus intéressant que le positionnement relatif entre le capot et les projecteurs sera au moins partiellement indépendant du positionnement des projecteurs par rapport à la carrosserie du véhicule. Les butées élastiques sont par conséquent non réglables.

Cette solution est intéressante pour les butées de capot, plus particulièrement pour les véhicules dont le style prévoit que la surface extérieure du capot soit continue avec celle des projecteurs et ce sur une longueur importante. Cette solution présente l'inconvénient de nécessiter un réglage très précis des projecteurs compte tenu du fait que les butées sont non réglables. Cette solution n'est par conséquent pas intéressante pour tous les types de véhicule et encore moins pour les volets de coffres à bagages.

L'invention a pour objectif de proposer une solution d'implantation des butées d'un ouvrant de véhicule qui pallie au moins un des inconvénients sus mentionnés. Plus particulièrement, l'invention a pour objectif de proposer une solution pour l'implantation des butées d'un ouvrant de véhicule qui est simple et peu coûteuse.

FR 2 921 627 dévoile un support de butée d'ouvrant de carrosserie d'un véhicule, remarquable en ce que ledit support est conçu pour être fixé à la carrosserie du véhicule sous un dispositif d'éclairage et/ou de signalisation dudit véhicule.

Ces mesures assurent une implantation de la butée qui s'avère simple, économique et sans tolérances serrées sur les cotes d'architecture de la carrosserie. En effet, le support peut être ajusté lors de son montage sur la carrosserie du véhicule et son ajustement permettra un positionnement exact de la butée et tout élément fixé également au support comme par exemple le dispositif d'éclairage et/ou de signalisation.

L'invention a pour objet l'amélioration de ce support par le dispositif de la revendication 1.

Le support est essentiellement un élément structurel dont l'apparence ne doit pas être soignée compte tenu qu'il va être caché notamment par le dispositif de signalisation et/ou d'éclairage selon l'invention. va ainsi remplacer des éléments de carrosserie emboutis et/ou soudés entre eux. Il va ainsi permettre une simplification de réalisation de la carrosserie.

Selon un mode avantageux de l'invention, le support est conçu pour supporter le dispositif d'éclairage et/ou de signalisation.

Selon un autre mode avantageux de l'invention, le support est en matière plastique. Selon un encore autre mode avantageux de l'invention, le support comprend la butée, la butée étant préférentiellement élastique.

Selon un encore autre mode avantageux de l'invention, le support et/ou la butée comprennent des moyens de réglage de la position de la butée par rapport au support. Préférentiellement, il s'agit de moyens de réglage de la longueur de la butée à partir du support, ces moyens étant par exemple des moyens à vissage. Selon un encore autre mode avantageux de l'invention, le support comprend une première partie destinée à la fixation du support à la carrosserie du véhicule, la première partie étant préférentiellement généralement plane, et une deuxième partie en saillie de la première partie destinée à recevoir la butée. La première partie du support peut comprendre au moins un orifice de montage à la carrosserie, préférentiellement plusieurs orifices.

Selon un autre encore mode avantageux de l'invention, la deuxième partie du support forme un volume et comprend une surface de montage de la butée, ladite surface étant inclinée, préférentiellement d'un angle compris entre 30° et 60° par rapport à l'horizontale, en position de montage sur le véhicule avec la première partie généralement verticale. Le volume en question de la deuxième partie du support peut comprendre deux murets ou parois latérales généralement parallèles et verticales de manière à assurer une rigidité satisfaisante en particulier pour des efforts dans un plan généralement vertical.

Selon un encore autre mode avantageux de l'invention, la surface de montage de la butée comprend un trou destiné à recevoir des moyens de fixation de la butée.

L'invention a pour objet un dispositif de signalisation et/ou d'éclairage d'un véhicule, préférentiellement du type feux arrière, comprenant un boîtier de signalisation et/ou d'éclairage destiné à recevoir au moins une source lumineuse; une jupe de section généralement en L avec une première aile destinée à être disposée de manière adjacente et généralement parallèle à une face latérale du boîtier et une deuxième aile destinée à recevoir une butée d'ouvrant de la carrosserie du véhicule, la jupe formant ainsi une zone de réception d'une partie d'un bord latéral de l'ouvrant; remarquable en ce qu'il comprend, en outre, un support de la butée, selon l'invention.

Selon l'invention, le support est destiné à s'étendre sous la deuxième aile de la jupe, la dite deuxième aile comprenant un orifice destiné être traversé par la butée supportée par le support.

L'invention a également pour objet un véhicule notamment automobile comprenant un support selon l'invention et/ou un dispositif de signalisation et/ou d'éclairage selon l'invention.

D'autres caractéristiques et avantages de la présente invention seront mieux compris à l'aide de la description et des dessins parmi lesquels :
- la figure 1 est vue arrière d'un feu de signalisation d'un véhicule équipé d'une butée de volet et conforme à l'invention ;
- la figure 2 est une vue arrière d'un support de butée de volet, conforme à l'invention.

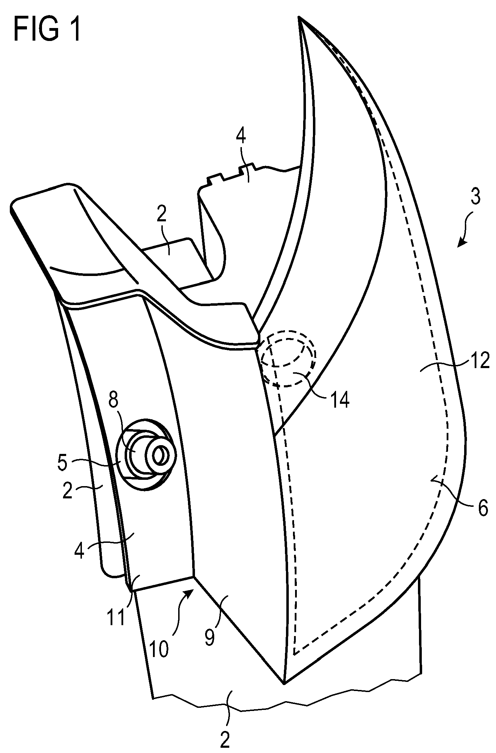

La figure 1 illustre un feu arrière droit de signalisation 3 d'un véhicule. Il comprend de manière classique un boîtier 4 muni d'au moins un support d'ampoule 14 ou de tout autre type de source lumineuse, d'une surface réfléchissante 12 et d'un couvercle transparent 6.

Une jupe 10 est disposée latéralement au feu de signalisation. Elle comprend une section généralement en « L » avec une première aile 9 disposée de manière adjacente et généralement parallèle à une face latérale (non visible) du boîtier 4 et une deuxième aile 11 généralement parallèle à la surface du couvercle transparent 6 du feu et en retrait de celle-ci. La jupe 10 forme ainsi un logement en forme d'épaulement destiné à recevoir une section du bord latéral droit du volet de coffre à bagage (non illustré).

Un support 2 partiellement visible à la figure 1 est disposé derrière le boîtier 4 et derrière la jupe 10, plus particulièrement derrière la deuxième aile 11 de la jupe 10. La deuxième aile 11 de la jupe comprend un orifice 5 au travers duquel est disposée une butée élastique 8 de manière à être en saillie de la surface extérieure de ladite aile 11. Le support 2 sert ainsi de support de butée ainsi que de support du feu arrière.

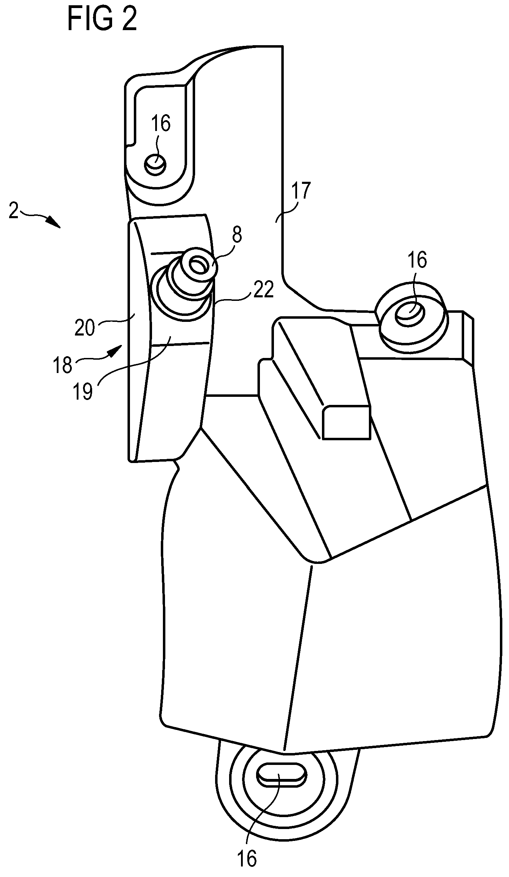

Le support est illustré de manière détaillée à la figure 2. Il est en matière plastique et comprend essentiellement une première partie 17 formant une surface de montage à la carrosserie du véhicule. Cette première partie comprend une série de trous 16 ou oeillets de fixation par vissage, clippage ou tout autre moyen de fixation connu. Cette surface de montage correspond à la face arrière (non visible) du support et peut être généralement plane. Cette surface peut cependant prendre diverses formes afin de se conformer à la carrosserie du véhicule et aux contraintes d'encombrement. Le support comprend également une deuxième partie 18 sur laquelle la butée 8 est fixée. Cette deuxième partie forme un volume et présente une surface de montage 19 de la butée qui est inclinée lorsque le support est en position de montage sur le véhicule (cette position correspondant essentiellement à celle de la figure 2).

Il est à noter que la deuxième partie du support est en saillie de la surface de montage de la première partie 17. Elle présente deux parois latérales 20 et 22 rapprochées de manière à assurer une rigidité suffisante au soutien de la butée. L'écartement de ces deux parois est supérieur à la largeur de la butée 8, elle peut être comprise entre 110% et 200% de la largeur de la butée. En pratique, cet écartement peut être compris entre 10mm et 50 mm, préférentiellement entre 15mm et 40mm.

Il est également à noter que les points de fixation 16 de la première partie du support 2 sont au nombre de trois afin d'assurer une fixation stable et isostatique du support. A cette fin, ces points de fixations 16 sont disposés à des extrémités de la première partie 17 du support 2.

Comme cela est illustré à la figure 2, le support 2 peut comprendre d'autres volumes destinés à augmenter la rigidité et/ou à former des surfaces de soutien d'autres éléments avoisinants. Le support 2 peut dont servir à la fixation d'autres éléments comme par exemple le feu arrière adjacent.

La surface de montage 19 de la butée 8 est inclinée. Elle forme un angle compris entre 20° et 70° par rapport à l'horizontale, préférentiellement entre 30° et 60°, plus préférentiellement encore entre 35° et 55°. Cette surface 19 comprend un orifice (non visible) dans lequel la butée est engagée via des moyens de fixation comme par exemple du type crochets déformables à surface de contact positif. L'axe longitudinal de la butée forme un angle d'environ 90° avec la surface 19. L'orientation de la butée sera donc dépendante de l'angle de la surface 18 en position de montage du support 2 et formera préférentiellement un angle compris entre 20° et 70° par rapport à la verticale, préférentiellement entre 30° et 60°, plus préférentiellement encore entre 35° et 55°.

L'angle longitudinal de la butée peut former un angle avec la normale à la surface adjacente de la jupe. En effet, bien la figure 1 illustre une configuration où la butée est en saillie de manière généralement normale à la surface de la jupe avoisinante du trou, il peut en être autrement. En effet, la surface d'appui du volet destinée à venir en contact avec la butée peut former un angle par rapport à la portion de surface extérieure du volet correspondante, de manière à ce que l'effort de soutien de cette surface d'appui et de la butée correspondante ait une composante de soutien du poids du volet. Dans ce cas, l'ouverture pratiquée dans la jupe pourra présenter sur sa tranche une surface inclinée par rapport à la normale de cette portion de surface.

## Revendications

1. Dispositif de signalisation et/ou d'éclairage d'un véhicule, préférentiellement du type feux arrière, comprenant :
- un boîtier de signalisation et/ou d'éclairage (4) destiné à recevoir au moins une source lumineuse ;
- un support (2) de butée conçu pour être fixé à la carrosserie du véhicule
**caractérisé en ce qu'**il comprend
- une jupe (10) de section généralement en L avec une première aile (9) destinée à être disposée de manière adjacente et généralement parallèle à une face latérale du boîtier (4) et une deuxième aile (11) destinée à recevoir une butée (8) d'ouvrant de la carrosserie du véhicule, la jupe (10) formant ainsi une zone de réception d'une partie d'un bord latéral de l'ouvrant, et **en ce que** le support (2) supporte la butée (8) et est destiné à s'étendre sous la deuxième aile (11) de la jupe (10), ladite deuxième aile (11) comprenant un orifice (5) destiné être traversé par la butée (8) supportée par le support (2).

2. Dispositif de signalisation et/ou d'éclairage selon la revendication 1, **caractérisé en ce que** le support (2) est conçu pour supporter le boîtier de signalisation et/ou d'éclairage (4).

3. Dispositif de signalisation et/ou d'éclairage selon l'une des revendications 1 et 2, **caractérisé en ce que** le support (2) est en matière plastique.

4. Dispositif de signalisation et/ou d'éclairage selon l'une des revendications 1 à 3, **caractérisé en ce que** le support (2) comprend la butée (8), la butée étant préférentiellement élastique.

5. Dispositif de signalisation et/ou d'éclairage selon la revendication 4, **caractérisé en ce que** le support (2) et/ou la butée (8) comprennent des moyens de réglage de la position de la butée par rapport au support.

6. Dispositif de signalisation et/ou d'éclairage selon l'une des revendications 1 à 5, **caractérisé en ce que** le support (2) comprend une première partie (17) destinée à la fixation du support à la carrosserie du véhicule, la première partie étant préférentiellement généralement plane, et une deuxième partie (18) en saillie de la première partie (17) destinée à recevoir la butée (8).

7. Dispositif de signalisation et/ou d'éclairage selon la revendication 6, **caractérisé en ce que** la deuxième partie (18) du support (2) forme un volume et comprend une surface de montage (19) de la butée (8), ladite surface (19) étant inclinée, préférentiellement d'un angle compris entre 30° et 60° par rapport à l'horizontale, en position de montage sur le véhicule avec la première partie (17) généralement verticale.

8. Dispositif de signalisation et/ou d'éclairage selon la revendication 7, **caractérisé en ce que** la surface de montage (19) de la butée (8) comprend un trou destiné à recevoir des moyens de fixation de la butée (8).

9. Véhicule notamment automobile comprenant un dispositif de signalisation et/ou d'éclairage selon l'une des revendications 1 à 8.

## Patentansprüche

1. Signalisierung- und/oder Beleuchtungsvorrichtung eines Fahrzeugs, bevorzugt des Typs Heckleuchte, die Folgendes umfasst:
- ein Signalisierungs- und/oder Beleuchtungsgehäuse (4), das dazu bestimmt ist, mindestens eine Lichtquelle aufzunehmen,
- einen Anschlaghalter ((2), der ausgelegt ist, um an der Karosserie des Fahrzeugs befestigt zu sein, **dadurch gekennzeichnet, dass** er Folgendes umfasst
- eine Schürze (10) mit allgemein L-förmigem Querschnitt mit einem ersten Flügel (9), der dazu bestimmt ist, neben und im Allgemeinen parallel zu einer Seite des Gehäuses (4) angeordnet zu sein, und einen zweiten Flügel (11), der dazu bestimmt ist, einen Türanschlag (8) der Karosserie des Fahrzeugs aufzunehmen, wobei die Schürze (10) daher einen Aufnahmebereich eines Teils eines Seitenrands der Tür bildet,
dass der Halter (2) den Anschlag (8) stützt und dazu bestimmt ist, sich unter dem zweiten Flügel (11) der Schürze (10) zu erstrecken, wobei der zweite Flügel (11) eine Öffnung (5) umfasst, die dazu bestimmt ist, von dem Anschlag (8), der von dem Halter (2) gestützt wird, durchquert zu werden.

2. Signalisierungs- und/oder Beleuchtungsgehäuse nach Anspruch 1, **dadurch gekennzeichnet, dass** der Halter (2) ausgelegt ist, um das Signalisierungs- und/oder Beleuchtungsgehäuse (4) zu stützen.

3. Signalisierungs- und/oder Beleuchtungsgehäuse nach einem der Ansprüche 1 und 2, **dadurch gekennzeichnet, dass** der Halter (2) aus Kunststoff besteht.

4. Signalisierungs- und/oder Beleuchtungsgehäuse nach einem der Ansprüche 1 bis 3, **dadurch gekennzeichnet, dass** der Halter (2) einen Anschlag (8) umfasst, wobei der Anschlag vorzugsweise elastisch ist.

5. Signalisierungs- und/oder Beleuchtungsgehäuse nach Anspruch 4, **dadurch gekennzeichnet, dass** der Halter (2) und/oder der Anschlag (8) Einstellmittel der Position des Anschlags in Bezug auf den Halter umfassen.

6. Signalisierungs- und/oder Beleuchtungsgehäuse nach einem der Ansprüche 1 bis 5, **dadurch gekennzeichnet, dass** der Halter (2) einen ersten Teil (17) umfasst, der zur Befestigung des Halters an der Karosserie des Fahrzeugs bestimmt ist, wobei der erste Teil vorzugsweise im Allgemeinen flach ist, und einen zweiten Teil (18), der von dem ersten Teil (17) vorsteht, der dazu bestimmt ist, den Anschlag (8) aufzunehmen.

7. Signalisierungs- und/oder Beleuchtungsgehäuse nach Anspruch 6, **dadurch gekennzeichnet, dass** der zweite Teil (18) des Halters (2) einen Raum bildet und eine Montageoberfläche (19) des Anschlags (8) umfasst, wobei die Oberfläche (19) vorzugsweise um einen Winkel zwischen 30° und 60° in Bezug auf die Waagerechte in Montageposition auf das Fahrzeugs geneigt ist, wobei der erste Teil (17) im Allgemeinen vertikal ist.

8. Signalisierungs- und/oder Beleuchtungsgehäuse nach Anspruch 7, **dadurch gekennzeichnet, dass** die Montageoberfläche (19) des Anschlags (8) eine Bohrung umfasst, die dazu bestimmt ist, Befestigungsmittel des Anschlags (8) aufzunehmen.

9. Fahrzeug, insbesondere Kraftfahrzeug, das ein Signalisierungs- und/oder Beleuchtungsgehäuse nach einem der Ansprüche 1 bis 8 umfasst.

## Claims

1. A signalling and/or lighting device of a vehicle, preferably of the taillight type, including:
- a signalling and/or lamp box (4) intended to receive at least one light source;
- an end stop support (2) designed to be fixed to the body of the vehicle,
**characterized in that** it includes
- a skirt (10) of generally L-shaped section with a first wing (9) intended to be disposed in an adjacent and generally parallel manner to a lateral face of the box (4), and a second wing (11) intended to receive an opening panel end stop (8) of the body of the vehicle, the skirt (10) thus forming a receiving zone of a part of a lateral edge of the opening panel,
and **in that**
the support (2) supports the end stop (8) and is intended to extend beneath the second wing (11) of the skirt (10), said second wing (11) including an orifice (5) intended to be passed through by the end stop (8) supported by the support (2).

2. The signalling and/or lighting device according to Claim 1, **characterized in that** the support (2) is designed to support the signalling and/or lamp box (4).

3. The signalling and/or lighting device according to one of Claims 1 and 2, **characterized in that** the support (2) is of plastic material.

4. The signalling and/or lighting device according to one of Claims 1 to 3, **characterized in that** the support (2) includes the end stop (8), the end stop being preferably elastic.

5. The signalling and/or lighting device according to Claim 4, **characterized in that** the support (2) and/or the end stop (8) include means for adjusting the position of the end stop with respect to the support.

6. The signalling and/or lighting device according to one of Claims 1 to 5, **characterized in that** the support (2) includes a first part (17) intended for the attaching of the support to the body of the vehicle, the first part being preferably generally flat, and a second part (18) projecting from the first part (17) intended to receive the end stop (8).

7. The signalling and/or lighting device according to Claim 6, **characterized in that** the second part (18) of the support (2) forms a volume and includes a mounting surface (19) of the end stop (8), said surface (19) being inclined, preferably by an angle comprised between 30° and 60° with respect to the horizontal, in mounting position on the vehicle with the first part (17) generally vertical.

8. The signalling and/or lighting device according to Claim 7, **characterized in that** the mounting surface (19) of the end stop (8) includes a hole intended to receive attachment means of the end stop (8).

9. A vehicle, in particular a motor vehicle, including a signalling and/or lighting device according to one of Claims 1 to 8.
